# EUROPÄISCHE PATENTSCHRIFT

(11) **EP 3 226 999 B1**
(45) Veröffentlichungstag und Bekanntmachung des Hinweises auf die Patenterteilung: **17.11.2021**
(21) Anmeldenummer: 15800840.9
(22) Anmeldetag: 25.11.2015
(51) Int. Cl.: B01D 46/00, B01D 46/10, B01D 46/52

(54) **PLATTENFÖRMIGES FILTERELEMENT SOWIE FILTEREINRICHTUNG**
FLAT FILTER ELEMENT, AND FILTER DEVICE
ÉLÉMENT FILTRANT EN FORME DE PLAQUE ET DISPOSITIF FILTRANT

(30) Priorität: 01.12.2014 DE 102014224549
(43) Veröffentlichungstag der Anmeldung: 11.10.2017
(73) Patentinhaber: MAHLE International GmbH, 70376 Stuttgart (DE)
(72) Erfinder: BREITFUSS, Karl, 9150 Bleiburg (AT); HECK, Tobias, 70499 Stuttgart (DE); KAISER, Sven Alexander, 71364 Winnenden (DE); KAISER, Stefan, 71686 Remseck (DE); KNAUSS, Rüdiger, 71394 Kernen i. R. (DE); SCHULLER, Marc, 71364 Winnenden (DE); VOTTELER, Georg, 71522 Backnang (DE)
(74) Vertreter: BRP Renaud & Partner mbB Rechtsanwälte Patentanwälte Steuerberater
(86) Internationale Anmeldenummer: PCT/EP2015/077658
(87) Internationale Veröffentlichungsnummer: WO 2016/087283

(56) Entgegenhaltungen:
- EP-A1- 0 900 585
- WO-A1-97/23360
- DE-A1- 19 508 534
- DE-U1-202005 015 911
- US-A1- 2004 035 096
- US-A1- 2014 260 143
- None

## Beschreibung

Die vorliegende Erfindung betrifft ein plattenförmiges Filterelement nach Anspruch 1 zum Filtern eines Fluids sowie eine Filtereinrichtung nach Anspruch 13 mit einem solchen Filterelement und ein Filtergehäuse nach Anspruch 17 einer solchen Filtereinrichtung.

Zum Reinigen eines Gases bzw. einer Flüssigkeit kommen üblicherweise Filtereinrichtungen zum Einsatz, die zu diesem Zweck ein Filterelement aufweisen. In einer Vielzahl von Anwendungen ist dabei der Einsatz plattenförmiger Filterelemente erwünscht und/oder notwendig. Derartige Filterelemente können einen Filterkörper aus einem Filtermaterial aufweisen, welches gefaltet ist.

Die Dokumente DE 202005015911, EP 0900585 und WO 97/23360 gehören zum Stand der Technik.

Zum Abdichten des Filterelements bzw. des Filterkörpers ist es vorstellbar, entlang eines umlaufenden Randes des Filterkörpers benachbarten Falten im Bereich des Seitenrands zu verkleben und hierdurch ein entsprechendes Abdichten des Filterelements zu erreichen.

Nachteilig hierbei ist, dass das Filterelement bzw. der Filterkörper hierdurch verhältnismäßig instabil sind. In der Folge kann das Filterelement bei der Montage in die zugehörige Filtereinrichtung, insbesondere beim Einbauen in das zugehörige Filtergehäuse beschädigt werden.

Die vorliegende Erfindung beschäftigt sich daher mit dem Problem, für ein plattenförmiges Filterelement der eingangs genannten Art sowie für eine zugehörige Filtereinrichtung und ein zugehöriges Filtergehäuse verbesserte oder zumindest andere Ausführungsformen anzugeben, die sich insbesondere durch eine erhöhte Stabilität auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, den Seitenrand eines plattenförmigen Filterelements aus zumindest einem Klebeabschnitt, der durch das Verkleben von zumindest zwei entlang des Seitenrands benachbarten Falten eines Filterkörpers ausgebildet ist, und aus zumindest einem Streifenabschnitt mit einem vom Filterkörper separaten Seitenstreifen abzudichten. Hierbei wird durch den zumindest einen Klebeabschnitt ein vereinfachtes Abdichten des Filterelements erreicht, während der zumindest eine Streifenabschnitt zu einer verbesserten Stabilität des Filterelements führt. Hierdurch ist das Filterelement bei vergleichsweise einfacher Herstellung und niedrigem Gewicht stabilisiert.

Dem Erfindungsgedanken entsprechend weist das plattenförmige Filterelement den Filterkörper auf, der aus einem gefalteten Filtermaterial hergestellt ist. Das Filterelement weist entlang seines umlaufenden Rands den in Umlaufrichtung verlaufenden Seitenrand auf, der zumindest einen solchen entlang des Seitenrands verlaufenden Klebeabschnitt und zumindest einen solchen entlang des Seitenrands verlaufenden Streifenabschnitt aufweist. Dabei ist der Klebeabschnitt durch das Verkleben von zumindest zwei entlang des Seitenrands benachbarten Falten im Bereich des Seitenrands ausgebildet, während der Streifenabschnitt einen vom Filterkörper separaten und am Filterkörper angebrachten Seitenstreifen aufweist.

Generell ist es vorstellbar, dass der jeweilige Streifenabschnitt auch zwei oder mehrere solche Seitenstreifen aufweist, die jeweils zueinander beabstandet angeordnet sein oder einander kontaktieren können. Dabei können zumindest zwei solche Seitenstreifen zumindest bereichsweise überlappend verlaufen. Das heißt insbesondere, dass einer der Seitenstreifen zumindest bereichsweise auf der vom Filterkörper abgewandten Seite eines anderen solchen Seitenstreifend angeordnet sein kann.

Das Filterelement dient dem Filtern eines Fluids und kann in beliebigen Anwendungen zum Einsatz kommen. Das Filterelement kann beispielsweise in einer Filtereinrichtung, insbesondere eines Fahrzeugs, eingesetzt werden, zum Beispiel zum Filtern von Frischluft in einer Klimaanlage für einen Fahrzeuginnenraum oder in einer Frischluftanlage bzw. Sauganlage für eine Brennkraftmaschine.

Das Filterelement ist plattenförmig ausgebildet. Das heißt, dass das Filterelement in einer Längsrichtung erheblich größer ausgebildet ist als in einer quer zur Längsrichtung verlaufenden Höhenrichtung. Dabei kann das Filterelement in Längsrichtung beispielsweise zumindest fünf Mal größer ausgebildet sein als in Höhenrichtung. Zudem kann das Filterelement in einer quer zur Längsrichtung und quer zur Höhenrichtung verlaufenden Querrichtung zumindest fünf Mal größer ausgebildet sein als in Höhenrichtung.

Bei bevorzugten Ausführungsformen weist ein solcher Seitenstreifen einen mit einer zugehörigen Führungsstruktur eines Filtergehäuses der Filtereinrichtung zusammenwirkenden Führungsabschnitt auf. Der Führungsabschnitt dient insbesondere dem Zweck, das Filterelement beim Einbau und/oder Ausbau in ein bzw. aus einem zugehörigen Filtergehäuse zu führen. Vorstellbar sind auch Varianten, bei denen mittels der Führungsstruktur und des Führungsabschnittes eine Fixierung des Filterelements in dem Filtergehäuse realisiert ist.

Bei bevorzugten Varianten überragt der Führungsabschnitt des Seitenstreifens den Filterkörper quer zur Umlaufrichtung. Das heißt insbesondere, dass der Führungsabschnitt den Filterkörper in Höhenrichtung überragt. Hierdurch wird ein vereinfachtes Führen des Filterelements in das zugehörige Filtergehäuse der Filtereinrichtung und/oder das Herausnehmen des Filterelements aus dem Filtergehäuse erreicht.

Zum Führen und/oder Fixieren des Filterelements im Filtergehäuse können der Führungsabschnitt und/oder die Führungsstruktur beliebig ausgebildet bzw. ausgestaltet sein. Vorstellbar sind beispielsweise Ausgestaltungen, bei denen ein abstehender Pin des Führungsabschnitts mit einer entsprechenden Führungsstruktur des Filtergehäuses zusammenwirkt. Auch eine umgekehrte Ausgestaltung ist vorstellbar.

Vorteilhaft sind Ausführungsformen, bei denen der Führungsabschnitt des Filterelements und die Führungsstruktur des Filtergehäuses nach dem Schlüssel-Schloss-Prinzip zusammenwirken. Somit kann insbesondere sichergestellt werden, dass lediglich auf das Filtergehäuse abgestimmte Filterelemente in das Filtergehäuse einsetzbar sind. Hierdurch wird also insbesondere vermieden, dass falsche bzw. ungeeignete Filterelemente in das Filtergehäuse montiert werden können. In der Folge können durch die Verwendung von falschen Filterelementen verursachte Funktionsbeeinträchtigungen der Filtereinrichtung vermieden oder eine dahingehende Gefahr zumindest reduziert werden.

Das Schlüssel-Schloss-Prinzip zwischen dem Führungsabschnitt und der Führungsstruktur kann auf beliebige Weise realisiert sein. Vorstellbar ist beispielsweise das Zusammenwirken eines Pins mit einer Ausnehmung oder mehrerer Pins mit mehreren Ausnehmungen.

Die Führungsstruktur kann beliebig ausgebildet sein, insbesondere einen beliebigen Verlauf aufweisen, sofern ein Zusammenwirken der Führungsstruktur mit dem Führungsabschnitt des Filterelements möglich ist. Dabei ist es insbesondere vorstellbar, die Führungsstruktur gekrümmt auszugestalten. Hierdurch kann auch bei schwer zugänglichen Bauorten der Filtereinrichtung ein vereinfachtes Montieren des Filterelements in das Filtergehäuse und/oder Demontieren des Filterelements aus dem Filtergehäuse erzielt werden.

Die Kombination aus zumindest einem Klebeabschnitt und zumindest einem Streifenabschnitt des Seitenrands des Filterelements kann auf beliebige Weise erfolgen. Bevorzugt sind hierbei Ausgestaltungen, bei denen durch eine entsprechende Kombination von zumindest einem solchen Klebeabschnitt und zumindest einem solchen Streifenabschnitt eine ausreichende Stabilität und/oder ein ausreichendes Abdichten des Filterkörpers bzw. des Filterelements gewährleistet ist.

Vorstellbar sind hierbei Ausführungsformen, bei denen wenigstens ein solcher Klebeabschnitt entlang des Seitenrands unterbrochen ist. Ebenso vorstellbar sind Ausführungsformen, bei denen wenigstens ein solcher Streifenabschnitt entlang des Seitenrands unterbrochen ist. Das heißt, dass ein solcher Klebeabschnitt bzw. ein solcher Streifenabschnitt sich nicht zwangsläufig über den gesamten Seitenrand erstrecken. Hierdurch ist durch eine entsprechende Auswahl von Klebeabschnitten und/oder Streifenabschnitten eine Optimierung der Stabilität und/oder des Abdichtens möglich. Hierbei können wenigstens ein solcher Klebeabschnitt und wenigstens ein solcher Streifenabschnitt entlang des Seitenstreifens benachbart angeordnet sein.

Vorstellbar ist es auch, dass ein solcher Streifenabschnitt zumindest bereichsweise auf der vom Filterkörper abgewandten Seite eines solchen Klebeabschnitts angeordnet ist.

Der am Filterkörper angebrachte Seitenstreifen kann am Filterkörper, insbesondere am Filtermaterial, fixiert sein. Eine solche Fixierung kann beispielsweise durch eine stoffschlüssige Verbindung, insbesondere das Verkleben und/oder Verschweißen des Seitenstreifens mit dem Filterkörper, realisiert sein. Hierbei ist es möglich, dass der am Filterkörper fixierte Seitenstreifen zusätzlich zur Stabilisierung des Filterkörpers den Filterkörper abdichtet. Liegt eine solche Ausgestaltung vor, so ist das Vorsehen eines Klebeabschnitts im Bereich des Seitenstreifens zum Abdichten nicht zwingend notwendig. Selbstverständlich sind auch Ausführungsformen vorstellbar, bei denen das Abdichten sowohl durch den Streifenabschnitt bzw. den Seitenstreifen als auch durch den Klebeabschnitt realisiert ist.

Ein solcher Seitenstreifen kann auch integral an einer Dichtung des Filterelements ausgebildet sein, die aus einem Kunststoff hergestellt ist. In einem solchen Fall ist eine Fixierung des Seitenstreifens am Filterkörper nicht zwingend notwendig. Der Seitenstreifen dient hierbei der Stabilisierung des Filterkörpers. Die Dichtung kann prinzipiell aus einem beliebigen Kunststoff, beispielsweise aus Polyurethan, hergestellt sein.

Die integrale Ausbildung des Seitenstreifens an der Dichtung kann auf beliebige Weise realisiert sein. Vorstellbar sind beispielsweise Ausführungsformen, bei denen der Seitenstreifen in der Dichtung eingegossen ist. Alternativ oder zusätzlich sind Ausführungsformen vorstellbar, bei denen der Seitenstreifen eine Perforation aufweist, die vom Dichtungsmaterial der Dichtung durchsetzt ist.

Der Streifenabschnitt bzw. der Seitenstreifen ist vorzugsweise in Abschnitten des Filterkörpers an den Filterkörper angebracht, in denen die Realisierung eines Klebeabschnittes nicht möglich und/oder erschwert ist.

Bei vorteilhaften Varianten ist wenigstens ein solcher Seitenstreifen an einer Schrägseite des Filterkörpers angebracht. Dabei weist der Filterkörper eine viereckige Grundstruktur mit jeweils zwei entlang der Umlaufrichtung im Wesentlichen parallel verlaufenden Filterkörperseiten auf, wobei zumindest eine der Filterkörperseiten durch eine solche Schrägseite unterbrochen ist, die quer zu den Filterkörperseiten verläuft.

Besonders bevorzugt sind hierbei Varianten, bei denen sich der Seitenstreifen bzw. der Streifenabschnitt in Umlaufrichtung über mehrere Falten erstreckt.

Bei weiteren Varianten erstreckt sich zumindest ein solcher Streifenabschnitt über zumindest zwei Seiten des Filterkörpers. Das heißt, dass sich der Streifenabschnitt über zwei Filterkörperseiten und/oder über eine Filterkörperseite und eine Schrägseite erstrecken kann. In einem solchen Fall ist der Streifenabschnitt mit einem Winkel versehen, damit er an den Seiten des Filterkörpers angebracht werden kann. Hierdurch kann das Filterelement aus weniger Einzelteilen zusammengesetzt werden, wodurch die Herstellung des Filterelements vereinfacht und/oder kostengünstiger wird.

Der jeweilige Streifenabschnitt bzw. der jeweilige Seitenstreifen kann aus einem beliebigen Material hergestellt sein, sofern sich dieses Material zum Einsatz im Filterelement eignet.

Der jeweilige Seitenstreifen kann aus einem Kunststoff, insbesondere aus einem thermoplastischen Kunststoff hergestellt sein. Dabei ist es vorstellbar, den Seitenstreifen als ein Extrusionsteil herzustellen. Zu denken ist auch an Ausgestaltungen, bei denen ein solcher Seitenstreifen als ein Spritzgussteil hergestellt ist.

Vorstellbar ist es auch, zumindest einen solchen Seitenstreifen aus einem Vlies herzustellen. Selbstverständlich sind auch Seitenstreifen vorstellbar, die aus einer Mischung unterschiedlicher Werkstoffe hergestellt sind.

Bei bevorzugten Varianten weist zumindest ein solcher Streifenabschnitt, insbesondere der zugehörige Seitenstreifen, ein Kennzeichnungselement auf. Mittels des Kennzeichnungselements ist eine Kennzeichnung und/oder Erkennung des Filterelements möglich. Hierbei sind Ausführungsformen vorteilhaft, bei denen das Kennzeichnungselement aus einem metallischen Werkstoff hergestellt ist. Die Verwendung eines metallischen Werkstoffs zur Herstellung des Kennzeichnungselements hat insbesondere den Vorteil, dass das Filterelement auch im Falle einer Zerstörung, insbesondere bei einem Brand, erkannt werden kann.

Es versteht sich, dass neben einem solchen Filterelement sowie einer solchen Filtereinrichtung auch ein solches Filtergehäuse zum Umfang dieser Erfindung gehört, das im Stande ist mit einem solchen Führungsabschnitt zusammenzuwirken. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht einer Filtereinrichtung,
- Fig. 2: eine Draufsicht auf ein Filterelement,
- Fig. 3: eine Seitenansicht des Filterelements,
- Fig. 4: eine Draufsicht auf eine Filtereinrichtung im Schnitt,
- Fig. 5: einen Querschnitt durch die Filtereinrichtung,
- Fig. 6: einen Längsschnitt durch die Filtereinrichtung,
- Fig. 7: eine Draufsicht auf eine Filtereinrichtung im Schnitt, bei einem anderen Ausführungsbeispiel.

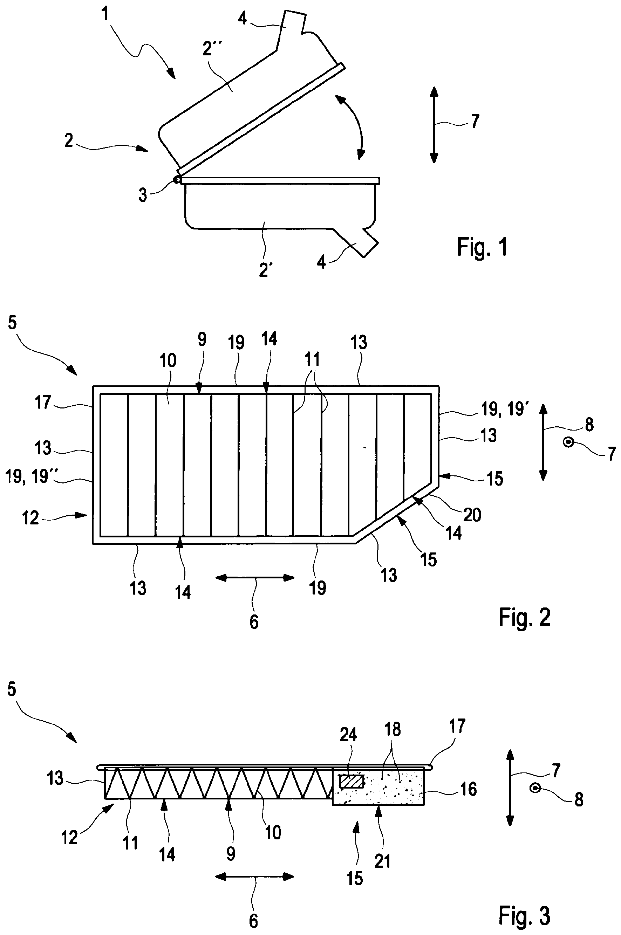

In Fig. 1 ist eine Seitenansicht einer Filtereinrichtung 1 zum Filtern eines Fluids, beispielsweise von Frischluft für eine nicht gezeigte Brennkraftmaschine, dargestellt. Die Filtereinrichtung 1 weist ein Filtergehäuse 2 auf, das zweiteilig ausgebildet ist und ein unteres Gehäuseteil 2' sowie ein oberes Gehäuseteil 2" aufweist. Die Gehäuseteile 2', 2" sind mittels Schwenklager 3 aneinander gelagert, derart, dass das Gehäuse 2 geschlossen und geöffnet werden kann. Am jeweiligen Gehäuseteil 2', 2" ist ein Anschluss 4 ausgebildet, um das zu filternde Fluid in die Filtereinrichtung 1 einzubringen bzw. das gefilterte Fluid aus der Filtereinrichtung 1 zu fördern.

Zum Filtern des Fluids weist die Filtereinrichtung 1 ein austauschbares Filterelement 5 auf, das in Fig. 2 in einer Draufsicht und in Fig. 3 in einer Seitenansicht gezeigt ist. Das Filterelement 5 ist plattenartig ausgebildet. Das heißt, dass das Filterelement 5 in einer Längsrichtung 6 größer ausgebildet ist als in einer quer zur Längsrichtung 6 verlaufenden Höhenrichtung 7. Zudem ist das Filterelement 5 in einer quer zur Längsrichtung 6 und quer zur Höhenrichtung 7 verlaufenden Querrichtung 8 größer ausgebildet als in der Höhenrichtung 7. Zudem ist das Filterelement 5 im gezeigten Beispiel in Längsrichtung 6 größer ausgebildet als in Querrichtung 7, das plattenförmige Filterelement 5 ist also länglich ausgebildet. Das Filterelement 5 weist einen Filterkörper 9 aus einem gefalteten Filtermaterial 10 auf. Das Filtermaterial 10 ist zum Filtern des Fluids geeignet, das durch die Filtereinrichtung 1 bzw. das Filterelement 5 gefiltert werden soll. Durch das gefaltete Filtermaterial 10 entstehen im Filterkörper 9 sich in Querrichtung 8 erstreckende und in Längsrichtung 6 beabstandete Falten 11.

Das Filterelement 5 weist einen Seitenrand 12 auf, der, wie in Fig. 2 gezeigt, entlang eines umlaufenden Rands 13 des Filterelements 5 in Umlaufrichtung verläuft. Der Seitenrand 12 weist hierbei zumindest einen Klebeabschnitt 14 zum Abdichten des Filterkörpers 9 sowie zumindest einen Streifenabschnitt 15 auf. Der jeweilige Klebeabschnitt 14 ist durch das Verkleben von zumindest zwei entlang des Seitenrands 12 benachbarten Falten 11 im Bereich des Seitenrands 12 ausgebildet, wobei in Fig. 3 die Falten 11 der besseren Übersicht halber im unverklebten Zustand dargestellt sind. Zum Verkleben der Falten 11 kann der Filterkörper 9 in den entsprechenden Bereichen mit einer hier nicht sichtbaren Kleberaupe versehen werden. Das Verkleben der Falten 11 wird in der Art einer nicht näher gezeigten Taschenverklebung realisiert.

Der jeweilige Streifenabschnitt 15 weist zumindest einen Seitenstreifen 16 auf. Der jeweilige Seitenstreifen 16 kann aus einem Vlies bzw. einem Kunststoff, beispielsweise durch Spritzgießen, hergestellt sein. Dabei weist der in Fig. 3 gezeigte Streifenabschnitt 15 lediglich einen solchen Seitenstreifen 16 auf.

Das Filterelement 5 weist ferner eine Dichtung 17 auf, die aus einem Kunststoff, beispielsweise aus Polyurethan, hergestellt ist und im in der Höhenrichtung 7 oberen Bereich des Filterkörpers 9 in Umlaufrichtung verläuft. Hierbei ist der Seitenstreifen 16 des Streifenabschnitts 15 integral mit der Dichtung 17 ausgebildet. Hierzu kann der Seitenstreifen 16 mit der Dichtung 17 vergossen sein. Im gezeigten Beispiel weist der Seitenstreifen 16 eine Perforation 18 auf, die vom Werkstoff der Dichtung 17 durchsetzt ist.

Wie in Fig. 2 zu erkennen ist, weist das Filterelement 5 eine viereckige Grundstruktur mit jeweils zwei entlang der Umlaufrichtung parallel verlaufenden Filterkörperseiten 19 auf. Das heißt, dass der Filterkörper 9 zwei Filterkörperseiten 19 aufweist, die in Querrichtung 8 parallel und beabstandet verlaufen, wobei diese Filterkörperseiten 19 nachfolgend als vordere Stirnseite 19' bzw. hintere Stirnseite 19" bezeichnet werden. Der Filterkörper 9 weist ferner zwei in Längsrichtung 6 parallel verlaufende Filterkörperseiten 19 auf, die in Querrichtung 8 beabstandet sind. Dabei sind die vordere Stirnseite 19' sowie eine der in Umlaufrichtung benachbarten Filterkörperseiten 19 durch eine Schrägseite 20 des Filterkörpers 9 unterbrochen, die quer zur Längsrichtung 6 und quer zur Querrichtung 8 verläuft. Hierbei erstreckt sich der Streifenabschnitt 15 mit dem Seitenstreifen 16 über die Schrägseite 20 sowie die vordere Stirnseite 19' des Filterkörpers 9. Hierzu ist der Seitenstreifen 16 entsprechend gewinkelt ausgebildet.

Der Seitenstreifen 16 verläuft entlang der Schrägseite 20 über mehrere Falten 11 des Filterkörpers 9 und ist entlang der Schrägseite 20 am Filterkörper 9 fixiert, beispielsweise damit verklebt, um ein Abdichten des Filterkörpers 9 bzw. des Filterelements 5 zu gewährleisten. Im Bereich der vorderen Stirnseite 19' ist eine Fixierung des Streifenabschnitts 15 bzw. des Seitenstreifens 16 am Filterkörper 9 nicht zwingend notwendig, insbesondere weil der Seitenstreifen 16 integral mit der Dichtung 17 ausgebildet ist. Sowohl im Bereich der Schrägseite 20 als auch im Bereich der vorderen Stirnseite 19' führt der Streifenabschnitt 15 bzw. der Seitenstreifen 16 zu einer Stabilisierung des Filterelements 9, insbesondere in Längsrichtung 6.

Im Bereich der hinteren Stirnseite 19" ist ein solcher Klebeabschnitt 14 vorgesehen, der den Filterkörper 9 an der hinteren Stirnseite 19" abdichtet. Ebenso ist es vorstellbar, an der hinteren Stirnseite 19" alternativ oder zusätzlich einen solchen Streifenabschnitt 15 vorzusehen.

Es ist vorstellbar, den Filterkörper 9 im Bereich der Schrägseite 20 zusätzlich mit einem Klebeabschnitt 14 zu versehen. In diesem Fall ist der Streifenabschnitt 15 bzw. Seitenstreifen 16 im Bereich der Schrägseite 20 auf der vom Filterkörper 9 abgewandten Seite des Klebeabschnitts 14 angeordnet. An den dem Streifenabschnitt 15 in Umlaufrichtung benachbarten Filterkörperseiten 19 ist also jeweils ein solcher Klebeabschnitt 14 angeordnet. Auf der der Schrägseite 20 gegenüberliegenden Filterkörperseite 19 ist ebenfalls ein solcher Klebeabschnitt 14 vorgesehen.

Der Seitenstreifen 16 weist einen Führungsabschnitt 21 auf, der den Filterkörper 9 quer zur Umlaufrichtung, im gezeigten Beispiel in Höhenrichtung 7 überragt. Dabei wird der Filterkörper 9 lediglich in der in der Darstellung von Fig. 3 unteren Höhenrichtung 7 überragt. Mit anderen Worten, der Seitenstreifen 16 weist einen Führungsabschnitt 21 auf, der den Filterkörper 9 nach unten überragt. Hierdurch kann der Seitenstreifen 16 bzw. der Führungsabschnitt 21 mit dem Filtergehäuse 2 zusammenwirken.

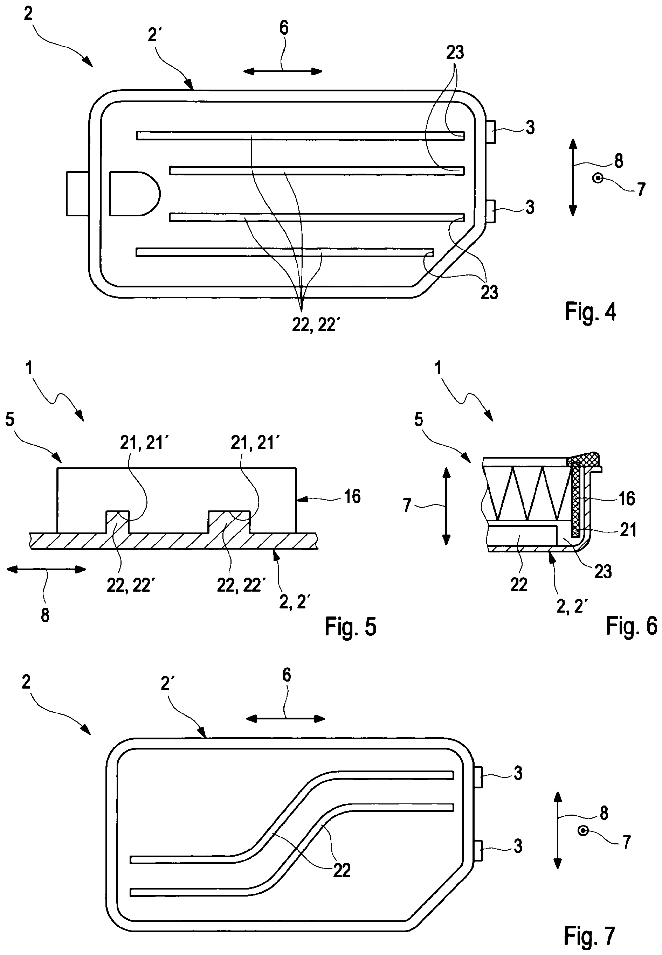

Zu diesem Zweck weist das Filtergehäuse 2, wie in Fig. 4 dargestellt, zumindest eine zum Führungsabschnitt 21 komplementäre Führungsstruktur 22 auf. Dabei ist die zumindest eine Führungsstruktur 22 im Filtergehäuse 2 in Fig. 4 rein beispielhaft im Gehäuseunterteil 2' ausgebildet.

Fig. 5 zeigt einen Querschnitt durch die Filtereinrichtung 1 beim in dem Filtergehäuse 2 eingesetzten Filterelement 5, wobei lediglich der Seitenstreifen 16 und das Gehäuseunterteil 2' zu sehen sind. Dabei ist der Seitenstreifen 16 im Bereich der vorderen Stirnseite 19' zu sehen. Es ist zu erkennen, dass der Seitenstreifen 16 im Bereich der vorderen Stirnseite 19' zwei solche Führungsabschnitte 21 aufweist, die mit entsprechenden Führungsstrukturen 22 des Gehäuses 2 zusammenwirken. Zu erkennen ist ferner, dass die Führungsabschnitte 21 als Nuten 21' ausgestaltet sind, die unterschiedlich ausgebildet sind. Die jeweilige Nut 21 wirkt mit einer zugehörigen Rippe 22' als Führungsstruktur 22 des Gehäuses 2 zusammen. Zu der jeweiligen Nut 21' gibt es also eine passende Rippe 22', derart, dass die Führungsabschnitte 21 und die Führungsstrukturen 22 in der Art eines Schüssel-Schloss-Prinzipes zusammenwirken. Somit sind lediglich auf das Filtergehäuse 2 abgestimmte Filterelemente 5 in das Filtergehäuse 2 einsetzbar.

In Fig. 4 ist zu erkennen, dass zusätzlich zu den gezeigten Führungsstrukturen 22 zwei Führungsstrukturen 22 im Bereich der Schrägseite 20 vorgesehen sind, die mit zwei entsprechenden Führungsabschnitten 21 des Seitenstreifens 16 im Bereich der Schrägseite 20 zusammenwirken, wobei auch diese Führungsstrukturen 22 als Rippen 22' ausgebildet sind.

Durch das Zusammenwirken der Führungsstrukturen 22 mit den Führungsabschnitten 21 ist es ferner möglich, das Filterelement 5 entlang des Filtergehäuses 2 zu führen, indem die Führungsabschnitte 21, insbesondere die Nuten 21', entlang der zugehörigen Führungsstrukturen 22, insbesondere den Rippen 22', bewegt werden. Diese Bewegung kann dabei insbesondere in Längsrichtung 6 erfolgen.

Wie insbesondere in Fig. 6 zu erkennen ist, weist das Gehäuse 2, insbesondere die Führungsstruktur 22, in einem in Längsrichtung 6 angeordneten Endabschnitt der jeweiligen Führungsstruktur 22 eine Aufnahme 23 auf, in die der Seitenstreifen 16, insbesondere der Führungsabschnitt 21, bei der erwünschten Montageposition des Filterelements 5 eingreift. Das heißt, dass das Filterelement 5 zum Einbringen in das Filtergehäuse 2 mittels den Führungsabschnitten 21 entlang der Führungsstrukturen 22 bewegt werden kann, um bei einer erwünschten Einbaulage in die Aufnahmen 23 einzugreifen. Hierdurch wird der Einbau des Filterelements 5 in das Gehäuse 2 erheblich vereinfacht.

Fig. 7 zeigt eine Draufsicht auf ein solches Gehäuseunterteil 2' eines solchen Gehäuses 2 bei einem anderen Ausführungsbeispiel. Darin ist zu erkennen, dass die Führungsstrukturen 22 des Filtergehäuses 2 im Gegensatz zu dem in Längsrichtung 6 im Wesentlichen gerade verlaufenden Führungsstrukturen 22 in Fig. 4 gekrümmt verlaufen. Hierdurch ist eine Montage bzw. Demontage des Filterelements 5 in das Filtergehäuse 2 auch bei schwieriger Einbaulage durch eine entsprechende Führung entlang der Führungsstrukturen 22 möglich. Zudem weist das Filtergehäuse 2 in Fig. 7 im Gegensatz zu in Fig. 4 lediglich zwei solche Führungsstrukturen 22 auf.

Der Seitenstreifen 16 weist, wie beispielsweise in Fig. 3 sichtbar ist, ein Kennzeichnungselement 24 auf, das der Kennzeichnung des Filterelements 5 dient. Dabei ist das Kennzeichenelement 24 auf der vom Filterkörper 9 abgewandten Seite des Seitenstreifens 16 angeordnet, damit es von außen sichtbar ist. Zudem ist das Kennzeichnungselement 24 aus einem metallischen Werkstoff hergestellt, so dass es auch im Beschädigungsfall, insbesondere im Brandfall, zur Erkennung des Filterelements 5 dienen kann.

## Patentansprüche

1. Plattenförmiges Filterelement (5) zum Filtern eines Fluids, mit einem Filterkörper (9) aus einem gefalteten Filtermaterial (10), wobei
- das Filterelement (5) entlang seines umlaufenden Rands (13) einen in Umlaufrichtung verlaufenden Seitenrand (12) aufweist,
- der Seitenrand (12) wenigstens einen entlang des Seitenrands (12) verlaufenden Streifenabschnitt (15) mit einem vom Filterkörper (9) separaten und am Filterkörper (9) angebrachten Seitenstreifen (16) aufweist,
**dadurch gekennzeichnet,**
**dass** der Seitenrand (12) zum Abdichten des Filterkörpers (9) wenigstens einen entlang des Seitenrands (12) verlaufenden Klebeabschnitt (14) aufweist, der im Bereich des Seitenrands (12) als eine Taschenverklebung zwischen zumindest zwei entlang des Seitenrands (12) benachbarten Falten (11) ausgebildet ist.

2. Filterelement nach Anspruch 1,
**dadurch gekennzeichnet,**
**dass** ein solcher Seitenstreifen (16) einen Führungsabschnitt (21) aufweist, der mit einer zugehörigen Führungsstruktur (22) eines Filtergehäuses (2) zum Führen des Filterelements (5) in oder aus dem Filtergehäuse (2) zusammenwirkt.

3. Filterelement nach Anspruch 2,
**dadurch gekennzeichnet,**
**dass** der Führungsabschnitt (21) des Seitenstreifens (16) den Filterkörper (9) quer zur Umlaufrichtung überragt.

4. Filterelement nach einem der Ansprüche 1 bis 3,
**dadurch gekennzeichnet,**
**dass** wenigstens ein solcher Klebeabschnitt (14) entlang des Seitenrands (12) unterbrochen ist.

5. Filterelement nach einem der Ansprüche 1 bis 4,
**dadurch gekennzeichnet,**
**dass** wenigstens ein solcher Klebeabschnitt (14) und wenigstens ein solcher Streifenabschnitt (15) entlang des Seitenstreifens (12) benachbart angeordnet sind.

6. Filterelement nach einem der Ansprüche 1 bis 5,
**dadurch gekennzeichnet,**
**dass** ein solcher Streifenabschnitt (15) zumindest bereichsweise auf der vom Filterkörper (9) abgewandten Seite eines solchen Klebeabschnitts (14) angeordnet ist.

7. Filterelement nach einem der Ansprüche 1 bis 6,
**dadurch gekennzeichnet,**
**dass** ein solcher Seitenstreifen (16) am Filterkörper (9) fixiert ist.

8. Filterelement nach einem der Ansprüche 1 bis 7,
**dadurch gekennzeichnet,**
**dass** das Filterelement (5) eine aus einem Kunststoff, insbesondere aus Polyurethan, hergestellte Dichtung (17) aufweist, wobei ein solcher Seitenstreifen (16) integral mit der Dichtung (17) ausgebildet ist.

9. Filterelement nach einem der Ansprüche 1 bis 8,
**dadurch gekennzeichnet,**
- **dass** der Filterkörper (9) eine viereckige Grundstruktur mit jeweils zwei entlang der Umlaufrichtung im Wesentlichen parallel verlaufende Filterkörperseiten (19) aufweist,
- **dass** wenigstens eine der Filterkörperseiten (19) durch eine quer zu den Filterkörperseiten (19) verlaufende Schrägseite (20) des Filterkörpers (9) unterbrochen ist,
- **dass** an wenigstens einer solchen Schrägseite (20) ein solcher Seitenstreifen (16) angebracht ist.

10. Filterelement nach Anspruch 9,
**dadurch gekennzeichnet,**
**dass** der Streifenabschnitt (15) mit einem Winkel zum Anbringen des Seitenstreifens (16) an den Seiten (19, 20) des Filterkörpers (9) versehen ist.

11. Filterelement nach einem der Ansprüche 1 bis 10,
**dadurch gekennzeichnet,**
**dass** ein solcher Seitenstreifen (16) aus einem Vlies oder aus einem thermoplastischen Kunststoff hergestellt ist.

12. Filterelement nach einem der Ansprüche 1 bis 11,
**dadurch gekennzeichnet,**
**dass** ein solcher Seitenstreifen (16) ein aus einem metallischen Werkstoff hergestelltes Kennzeichnungselement (24) zur Kennzeichnung des Filterelements (5) aufweist.

13. Filtereinrichtung (1) mit einem Filtergehäuse (2) und einem im Filtergehäuse (2) angeordneten Filterelement (5) nach einem der Ansprüche 1 bis 12.

14. Filtereinrichtung nach Anspruch 13,
**dadurch gekennzeichnet,**
**dass** das Filtergehäuse (2) eine mit dem Führungsabschnitt (21) des Filterelements (5) nach Anspruch 2 oder 3 zusammenwirkende Führungsstruktur (22) zum Führen des Filterelements (5) in das Filtergehäuse (2) und/oder aus dem Filtergehäuse (2) aufweist.

15. Filtereinrichtung nach Anspruch 14,
**dadurch gekennzeichnet,**
**dass** der Führungsabschnitt (21) und die Führungsstruktur (22) nach dem Schlüssel-Schloss-Prinzip zusammenwirken, derart, dass lediglich auf das Filtergehäuse (2) abgestimmte Filterelemente (5) in das Filtergehäuse (2) einsetzbar sind.

16. Filtereinrichtung nach Anspruch 14 oder 15,
**dadurch gekennzeichnet,**
**dass** die Führungsstruktur (22) einen gekrümmten Verlauf aufweist.

17. Filtergehäuse (2) einer Filtereinrichtung (1) nach einem der Ansprüche 14 bis 16.

## Claims

1. A flat filter element (5) for filtering a fluid, having a filter body (9) made up of a folded filter material (10), wherein
- the filter element (5) has along its circumferential edge (13) a side edge (12) running in circumferential direction,
- the side edge (12) has at least one strip portion (15), running along the side edge (12), with a side strip (16) separate from the filter body (9) and arranged on the filter body (9),
**characterized in that**
the side edge (12) for sealing the filter body (9) has at least one adhesive portion (14) running along the side edge (12), which adhesive portion is formed as a pocket gluing between at least two folds (11), adjacent along the side edge (12), in the region of the side edge (12).

2. The filter element according to claim 1,
**characterized in that**
such a side strip (16) has a guide portion (21), which cooperates with an associated guide structure (22) of a filter housing (2) for guiding the filter element (5) into or from the filter housing (2).

3. The filter element according to claim 2,
**characterized in that**
the guide portion (21) of the side strip (16) projects over the filter body (9) transversely to the circumferential direction.

4. The filter element according to one of claims 1 to 3,
**characterized in that**
at least one such adhesive portion (14) is interrupted along the side edge (12).

5. The filter element according to one of claims 1 to 4,
**characterized in that**
at least one such adhesive portion (14) and at least one such strip portion (15) are arranged in an adjacent manner along the side strip (12).

6. The filter element according to one of claims 1 to 5,
**characterized in that**
such a strip portion (15) is arranged at least in certain areas on the side of such an adhesive portion (14) facing away from the filter body (9).

7. The filter element according to one of claims 1 to 6,
**characterized in that**
such a side strip (16) is fixed on the filter body (9) .

8. The filter element according to one of claims 1 to 7,
**characterized in that**
the filter element (5) has a seal (17) produced from a plastic, in particular from polyurethane, wherein such a side strip (16) is formed integrally with the seal (17).

9. The filter element according to one of claims 1 to 8,
**characterized in that**
- the filter body (9) has a four-sided basic structure with respectively two filter body sides (19) running substantially in a parallel manner along the circumferential direction,
- at least one of the filter body sides (19) is interrupted by an oblique side (20) of the filter body (9) running transversely to the filter body sides (19),
- such a side strip (16) is arranged on at least one such oblique side (20).

10. The filter element according to claim 9,
**characterized in that**
the strip portion (15) is provided with an angle for arranging the side strip (16) on the sides (19, 20) of the filter body (9).

11. The filter element according to one of claims 1 to 10,
**characterized in that**
such a side strip (16) is produced from a non-woven material or from a thermoplastic plastic.

12. The filter element according to one of claims 1 to 11,
**characterized in that**
such a side strip (16) has a characterizing element (24), produced from a metallic material, for characterizing the filter element (5).

13. A filter device (1) with a filter housing (2) and with a filter element (5) arranged in the filter housing (2), according to one of claims 1 to 12.

14. The filter device according to claim 13,
**characterized in that**
the filter housing (2) has a guide structure (22) cooperating with the guide portion (21) of the filter element (5) according to claim 2 or 3, for guiding the filter element (5) into the filter housing (2) and or from the filter housing (2).

15. The filter device according to claim 14,
**characterized in that**
the guide portion (21) and the guide structure (22) cooperate according to the key-lock principle, such that only filter elements (5) coordinated with the filter housing (2) are able to be inserted into the filter housing (2).

16. The filter device according to claim 14 or 15,
**characterized in that**
the guide structure (22) has a curved course.

17. A filter housing (2) of a filter device (1) according to one of claims 14 to 16.

## Revendications

1. Élément de filtrage en forme de plaque (5) pour filtrer un fluide, comprenant un corps de filtre (9) constitué d'un matériau de filtration plié (10), dans lequel
- l'élément de filtre (5) présente un bord latéral (12) s'étendant dans le sens périphérique le long de son bord périphérique (13),
- le bord latéral (12) présente au moins une section de bande (15) s'étendant le long du bord latéral (12) avec une bande latérale (16) séparée du corps de filtre (9) et fixée au corps de filtre (9),
**caractérisé en ce que**
pour sceller le corps de filtre (9), le bord latéral (12) présente au moins une section adhésive (14) s'étendant le long du bord latéral (12), qui est conçue dans la zone du bord latéral (12) comme une liaison de poche entre au moins deux plis (11) adjacents le long du bord latéral (12).

2. Élément de filtre selon la revendication 1,
**caractérisé en ce qu'**
une telle bande latérale (16) présente une section de guidage (21) qui coopère avec une structure de guidage associée (22) d'un boîtier de filtre (2) pour guider l'élément de filtre (5) dans le ou hors du boîtier de filtre (2).

3. Élément de filtre selon la revendication 2,
**caractérisé en ce que**
la section de guidage (21) de la bande latérale (16) dépasse du corps de filtre (9) transversalement au sens périphérique.

4. Élément de filtre selon une des revendications 1 à 3,
**caractérisé en ce qu'**
au moins une telle section adhésive (14) est interrompue le long du bord latéral (12).

5. Élément de filtre selon une des revendications 1 à 4,
**caractérisé en ce qu'**
au moins une telle section adhésive (14) et au moins une telle section de bande (15) sont disposées de manière adjacente le long de la bande latérale (12).

6. Élément de filtre selon l'une quelconque des revendications 1 à 5,
**caractérisé en ce qu'**
une telle section de bande (15) est disposée au moins par endroits sur le côté opposé au corps de filtre (9), d'une telle section adhésive (14),

7. Élément de filtre selon l'une quelconque des revendications 1 à 6,
**caractérisé en ce qu'**
une telle bande latérale (16) est fixée au corps de filtre (9).

8. Élément de filtre selon l'une quelconque des revendications 1 à 7,
**caractérisé en ce que**
l'élément de filtre (5) présente un joint (17) en matière synthétique, en particulier en polyuréthane, une telle bande latérale (16) étant conçue d'un seul tenant avec le joint (17).

9. Élément de filtre selon l'une quelconque des revendications 1 à 8,
**caractérisé en ce que**
- le corps de filtre (9) présente une structure de base quadrangulaire avec respectivement deux côtés de corps de filtre (19) s'étendant sensiblement parallèlement le long du sens périphérique,
- au moins un des côtés de corps de filtre (19) est interrompu par un côté oblique (20) du corps de filtre (9) s'étendant transversalement aux côtés de corps de filtre (19),
- une telle bande latérale (16) est fixée sur au moins un tel côté oblique (20).

10. Élément de filtre selon la revendication 9,
**caractérisé en ce que**
la section de bande (15) est pourvue d'un angle pour fixer la bande latérale (16) aux côtés (19, 20) du corps de filtre (9).

11. Élément de filtre selon l'une quelconque des revendications 1 à 10,
**caractérisé en ce qu'**
une telle bande latérale (16) est fabriquée à partir d'un matériau non tissé ou d'une matière synthétique thermoplastique.

12. Élément de filtre selon l'une quelconque des revendications 1 à 11,
**caractérisé en ce qu'**
une telle bande latérale (16) présente un élément de marquage (24) fabriqué dans un matériau métallique pour marquer l'élément de filtre (5).

13. Dispositif de filtre (1) comprenant un boîtier de filtre (2) et un élément de filtre (5) selon l'une quelconque des revendications 1 à 12, disposé dans le boîtier de filtre (2).

14. Dispositif de filtre selon la revendication 13,
**caractérisé en ce que**
le boîtier de filtre (2) présente une structure de guidage (22) coopérant avec la section de guidage (21) de l'élément de filtre (5) selon la revendication 2 ou 3 pour guider l'élément de filtre (5) dans le boîtier de filtre (2) et/ou hors du boîtier de filtre (2).

15. Dispositif de filtre selon la revendication 14,
**caractérisé en ce que**
la section de guidage (21) et la structure de guidage (22) interagissent selon le principe de verrouillage de clé de sorte que seuls des éléments de filtre (5) adaptés au boîtier de filtre (2) peuvent être insérés dans le boîtier de filtre (2).

16. Dispositif de filtre selon la revendication 14 ou 15,
**caractérisé en ce que**
la structure de guidage (22) présente un tracé courbe.

17. Boîtier de filtre (2) d'un dispositif de filtre selon l'une quelconque des revendications 14 à 16.
